# FASCICULE DE BREVET EUROPEEN

(11) **EP 3 383 787 B1**
(45) Date de publication et mention de la délivrance du brevet: **01.01.2020**
(21) Numéro de dépôt: 16797905.3
(22) Date de dépôt: 17.11.2016
(51) Int. Cl.: B66C 23/20, F24S 40/00, F24S 20/20

(54) **METHODE ET SYSTEME DE MAINTENANCE POUR RECEPTEUR SOLAIRE**
WARTUNGSVERFAHREN UND SYSTEM FÜR SOLAREMPFÄNGER
MAINTENANCE METHOD AND SYSTEM FOR SOLAR RECEIVER

(30) Priorité: 30.11.2015 BE 201505776
(43) Date de publication de la demande: 10.10.2018
(73) Titulaire: Cockerill Maintenance & Ingéniérie S.A., 4100 Seraing (BE)
(72) Inventeur: DETHIER, Alfred, B-4140 Sprimont (BE); WINAND, Stéphane, 4031 Angleur (BE); LECLOUX, Yves, 4053 Embourg (BE)
(74) Mandataire: Pronovem
(86) Numéro de dépôt international: PCT/EP2016/077982
(87) Numéro de publication internationale: WO 2017/093033

(56) Documents cités:
- US-A1- 2011 297 206
- US-B2- 8 544 237

## Description

### Objet de l'invention

La présente invention ressort du domaine des centrales solaires et en particulier les centrales solaires à concentration et à tour *(CSP Towers).* Elle concerne en particulier l'installation et la maintenance des éléments externes à la tour solaire.

L'invention s'applique également à toute application technique qui nécessite le même type d'intervention en levage ou maintenance.

### Etat de la technique

L'installation et la maintenance des récepteurs solaires constituent un enjeu majeur dans le bon fonctionnement des centrales solaires à tour. La bonne réalisation de ces deux opérations garantit les meilleures performances de la centrale le plus longtemps possible.

Plusieurs solutions basées sur l'utilisation d'une grue existent dans différents domaines : construction, éolien, etc. Dans le domaine du solaire et en particulier dans les centrales solaires à tour, les grues sont généralement utilisées dans la construction, l'installation et le montage des récepteurs solaires au-dessus de la tour.

Dans le cas des récepteurs solaires de type cavité (par exemple projet Khi Solar One en Afrique du Sud) ou des récepteurs externes de petite taille, une grande grue plus haute que la tour est installée afin de réaliser les opérations de montage du récepteur. Ceci est applicable dans le cas d'une installation au-dessus de la tour avant la mise en route. Une fois cette installation terminée, la tour de montage est démontée et les opérations de maintenance seront réalisées par des portes d'accès dans la tour et dans le récepteur. Le matériel est monté au-dessus de la tour à l'aide d'un dispositif de levage.

Pour le récepteur solaire de type externe, une solution avec une grue montée au-dessus de la tour a été développée par la société SolarReserve, Californie, USA. Cette solution a fait l'objet de deux brevets qui ont été déposés en 2009 (US 8,544,237 B2) et 2010 (US 2011/0297206 A1) aux USA et en Espagne.

Le premier de ces brevets présente une méthode ainsi qu'un système de levage installé sur une tour solaire pour le remplacement des panneaux du récepteur solaire. Le système se compose:
- d'une piste de guidage installée sur toute la hauteur de la tour, le long desquels un panneau récepteur peut être déplacé depuis le sol au moyen d'un chariot à roulettes se déplaçant en montant sur la piste et par un premier câble actionné par un treuil situé au sommet de la tour ;
- d'une grue installée au-dessus du récepteur lui-même situé sur la base supérieure de la tour, capable de tourner à 360 degrés et attachée à un second câble. Une fois le panneau récepteur acheminé au sommet de la tour par le système de guidage et de levage ci-dessus, il est pris en charge par la grue qui l'achemine à l'endroit prévu pour son positionnement. Bien entendu, les opérations sont réalisées en sens inverse pour le démontage d'un panneau se trouvant sur le récepteur.

Le deuxième brevet, basé sur le premier, présente une méthode et un système de remplacement de panneaux d'un récepteur solaire externe à la tour. Le système se compose:
- d'une grue installée au-dessus de la tour pour supporter le panneau. Le corps de grue peut se déplacer horizontalement et en rotation par exemple grâce à une table tournante, ce qui lui permet d'accéder à tous les emplacements de panneaux ;
- d'un chariot avec un cadre porteur qui assure le maintien et le transport du panneau ;
- de rails circulaires installés au-dessus de la tour, autour du récepteur, pour guider le chariot.

La méthode de remplacement des panneaux consiste à :
- déployer la grue;
- attacher et supporter le panneau au moyen de la grue;
- déplacer et déposer le panneau sur le chariot;
- déplacer l'ensemble chariot-panneau et faire passer le panneau par une trappe d'accès ou le positionner à l'aide de la grue.

Cette solution, bien que très intéressante, ne permet pas de :
- transporter des panneaux de grandes dimensions;
- réaliser des opérations de maintenance directement sur le récepteur.

Le document CN 203269405 U décrit une grue destinée au montage de panneaux latéraux se déplaçant sur des chemins concentriques. Ce document fait partie de l'état de l'art général, car la grue est balancée par un ancrage central.

Deux autres documents concernent le système de balance romaine *(steelyard* - *lever scale)* au niveau de la charge. Le document CN 201406267 U présente un système permettant de manipuler un outillage tel qu'une pompe de graissage avec un certain degré de liberté fourni par le système de balance romaine (des orifices pour la pose de poids sont pourvus dans la partie médiane du fléau de la balance). Le document CN 104555715 A présente également un système de déport de la charge grâce à une balance romaine. Cependant, la balance reste à l'horizontale pendant toute la manœuvre dans les deux cas.

Enfin, dans le document FR 2 329 579 A1, l'intérêt est le montage d'éléments de grues dans le plan vertical et déporté grâce à un effet du levier.

### Buts de l'invention

L'invention vise à fournir une solution qui permette une réalisation simple, rapide et efficace des opérations de montage et de maintenance sur les récepteurs solaires externes installés au-dessus d'une tour de centrale solaire à concentration.

De plus, l'invention a pour but de proposer un équipement de maintenance disposé de manière permanente au niveau de la tour solaire, avec possibilité de parking aisé de cet équipement lorsqu'il n'est pas utilisé.

L'invention a également pour but de fournir un système de levage avec un déport de la charge permettant une approche aisée du récepteur par les opérateurs lors de la mise en œuvre de ce système.

### Principaux éléments caractéristiques de l'invention

Un premier aspect de la présente invention se rapporte à une tour pour centrale solaire à concentration comprenant une plateforme externe supérieure sur laquelle est disposé un récepteur solaire essentiellement cylindrique avec une surface externe latérale et une base supérieure, la surface latérale du récepteur comportant une pluralité de panneaux récepteurs montés de manière amovible et un système de pose et de maintenance des panneaux récepteurs, caractérisé en ce que le système de pose et de maintenance des panneaux récepteurs comprend une grue montée rotative à 360° et guidée au moyen d'au moins deux rails concentriques, sur la base supérieure du récepteur.

Selon des formes d'exécution préférées de l'invention, la tour pour centrale solaire à concentration comporte en outre au moins l'une des caractéristiques suivantes, ou une combinaison appropriée de plusieurs d'entre elles :
- la grue est disposée essentiellement horizontalement et est muni d'un bras télescopique avec un treuil permettant de dérouler un câble ;
- la grue est installée de façon permanente sur la tour ;
- le système de pose et de maintenance des panneaux récepteurs comprend également une nacelle pouvant accueillir au moins un opérateur de maintenance, solidaire d'un dispositif mécanique de balance à pantographe apte à conférer à la nacelle :
   - soit une position d'attente sur la plateforme externe de la tour ;
   - soit une position dans laquelle le pantographe est non déployé (entièrement) pour des interventions au niveau d'un bouclier thermique du récepteur ;
   - soit une position dans laquelle le pantographe est déployé pour des interventions sur un panneau récepteur ;
- le dispositif mécanique de balance à pantographe comporte un contrepoids, ainsi qu'un bras de connexion pour suspendre l'ensemble nacelle-dispositif de balance à pantographe au câble du bras télescopique de la grue, le dispositif de balance à pantographe permettant à la nacelle de se déplacer horizontalement par déploiement, respectivement repliement, du pantographe, grâce à un actionneur permettant ainsi d'écarter, respectivement de rapprocher, le contrepoids de la nacelle ;
- le contrepoids est fixé soit à une première extrémité d'une poutre, soit de manière réglable en un autre point de la poutre, dont l'autre extrémité est montée pivotante sur une première extrémité du pantographe, la seconde extrémité du pantographe étant accrochée à la nacelle ;
- l'actionneur comprend un vérin hydraulique connecté entre un point fixe de la poutre et une extrémité du bras de connexion permettant d'attacher l'ensemble nacelle-dispositif de balance à pantographe au câble de la grue ;
- le pantographe est composé d'un premier étrier monté pivotant sur la poutre et sur un second étrier, attaché à la nacelle, d'une plaque pivot montée pivotante sur un point central du premier étrier et montée pivotante à ses deux extrémités sur une première extrémité de deux barres articulées respectivement à leur autre extrémité sur la poutre et sur le second étrier.

Un deuxième aspect de la présente invention se rapporte à un procédé de pose/dépose d'un panneau récepteur dans une tour pour centrale solaire à concentration, comme décrite ci-dessus, au niveau d'un emplacement prévu à cet effet sur la surface externe latérale du récepteur, caractérisé au moins par les étapes successives suivantes :
- pour la pose, on oriente la grue selon l'azimut où se trouve la position du panneau à (rem)placer,
- on déploie le bras télescopique de la grue,
- on déroule le câble et on accroche le panneau récepteur à celui-ci soit au niveau du pied de la tour, soit au niveau de la plateforme au pied du récepteur,
- on remonte le panneau en enroulant le câble jusqu'à hauteur de l'emplacement prévu pour la pose,
- on rentre partiellement le bras télescopique de la grue pour rapprocher le panneau de l'emplacement,
- on solidarise le panneau au récepteur dans cet emplacement,
- les opérations de dépose étant pratiquées en sens inverse par rapport à la séquence ci-dessus.

Un troisième aspect de la présente invention se rapporte à un procédé de maintenance d'un panneau récepteur en place dans une tour pour centrale solaire à concentration, comme décrite ci-dessus, caractérisé au moins par les étapes successives suivantes :
- on déploie le bras télescopique de la grue, on déroule le câble et on l'accroche à l'ensemble nacelle-dispositif de balance à pantographe se trouvant en standby (ou position d'attente) sur la plateforme de la tour, au pied du récepteur, le pantographe étant en position non déployée,
- on remonte l'ensemble nacelle-dispositif de balance à pantographe,
- on oriente la grue selon l'azimut où se trouve la position du panneau dont la maintenance doit être effectuée,
- on rapproche l'ensemble nacelle-dispositif de balance à pantographe du récepteur en utilisant la grue,
- on approche la nacelle à proximité du panneau dont la maintenance est à effectuer en déployant le pantographe.

Un quatrième aspect de la présente invention se rapporte à un procédé de maintenance sur un bouclier thermique se trouvant en avant d'un récepteur sur une tour pour centrale solaire à concentration, comme décrite ci-dessus, caractérisé au moins par les étapes successives suivantes :
- on déploie le bras télescopique de la grue, on déroule le câble et on l'accroche à l'ensemble nacelle-dispositif de balance à pantographe se trouvant en standby (ou position d'attente) sur la plateforme de la tour, au pied du récepteur, le pantographe étant en position non déployée,
- on remonte l'ensemble nacelle-dispositif de balance à pantographe,
- on oriente la grue selon l'azimut où se trouve l'endroit du bouclier thermique où la maintenance doit être effectuée,
- on rapproche l'ensemble nacelle-dispositif de balance à pantographe du bouclier thermique en utilisant la grue, le pantographe étant toujours non déployé,
- si nécessaire, on approche la nacelle à proximité du bouclier thermique en déployant au moins partiellement le pantographe.

### Brève description des figures

La figure 1 représente une vue d'ensemble d'une forme d'exécution du récepteur solaire et de la grue du système de maintenance selon la présente invention montrant la grue installée au-dessus du récepteur.

La figure 2A représente le système de la figure 1 avec la grue en position de repos ou « standby » tandis que la figure 2B montre la grue en position de déploiement.

Les figures 3A à 3D représentent des vues pour les différentes étapes consécutives nécessaires à l'installation des panneaux lors d'une opération de montage ou maintenance selon l'invention (plus particulièrement lors du remplacement d'un panneau), à savoir respectivement avec grue non déployée, grue déployée, prise et remontée du panneau par la grue au-dessus de la tour à partir du sol ou du haut de la structure supportant le récepteur (plateforme) et rapprochement/remplacement du panneau.

La figure 4 montre une vue d'ensemble avec les différentes positions possibles pour la nacelle : pantographe non déployé et nacelle en standby sur la plateforme ou le long du bouclier thermique, pantographe déployé et nacelle le long du panneau.

Les figures 5 et 6 sont des vues de détail montrant la nacelle et le dispositif de balance à pantographe de la figure 4, le pantographe étant déployé ou replié selon le cas.

### Description détaillée de l'invention

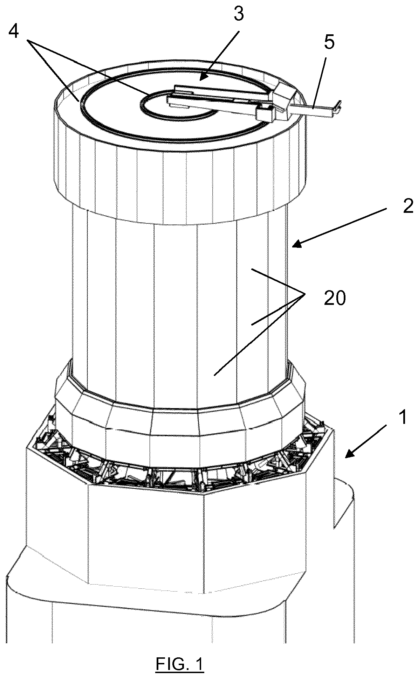

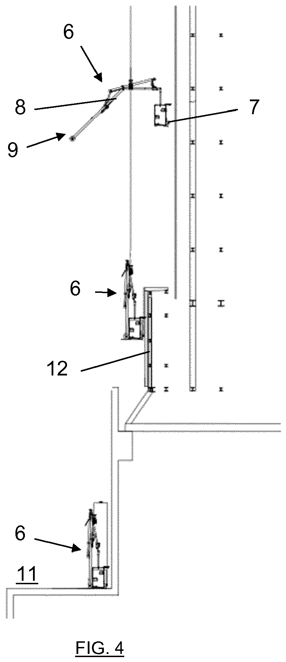

La solution proposée dans le cadre de la présente invention concerne une méthode et un système pour la maintenance des récepteurs solaires externes 2 installés au-dessus d'une tour 1 (figures 1 et 4).

Le système se compose :
- d'une grue 3 conçue et dimensionnée pour supporter des charges très élevées, comme le poids d'un panneau avec une marge de sécurité, et installée au-dessus du récepteur solaire 2, c'est-à-dire sur la plateforme se trouvant au sommet de celui-ci ;
- de rails de guidage 4 concentriques installés sur la plateforme au-dessus du récepteur solaire 2 et qui assurent le guidage en rotation (azimut) du bras 5 de la grue 3 ;
- d'une nacelle 7 à pantographe 8 équilibrée par un dispositif de balance 9 pour intervenir directement sur les panneaux 20 du récepteur 2.

Dans le cas d'une opération de maintenance, la nacelle 7 sera utilisée pour:
- la maintenance des panneaux, y compris le sablage et la peinture ;
- la maintenance des réfractaires.

Dans le cas du remplacement d'un panneau 20, la méthode de maintenance se compose des étapes suivantes:
- déployer la grue 3 ;
- désolidariser, prendre le panneau 20 à remplacer sur le récepteur et le déplacer à la position prévue ;
- descendre le panneau 20 ;
- prendre un nouveau panneau 20 ;
- remonter le nouveau panneau 20 au-dessus de la tour, à hauteur de son emplacement sur le récepteur 2 ;
- remplacer le panneau 20 (par insertion du nouveau panneau).

Les avantages de la solution proposée sont :
- une grue compacte de grande capacité, installée d'une façon permanente est utilisable pour le contrôle et la maintenance en continu du récepteur solaire ;
- une nacelle à pantographe équilibrée par une balance qui assure avec stabilité une grande accessibilité pour le personnel de maintenance aux différents composants du récepteur solaire ;
- la possibilité de remplacer un panneau complet ;
- la possibilité d'intervenir sur chaque tube échangeur de chaleur du panneau ;
- assurer une inspection efficace du récepteur solaire ;
- assurer le sablage et la remise en peinture du récepteur.

### Description de formes d'exécution préférées de l'invention

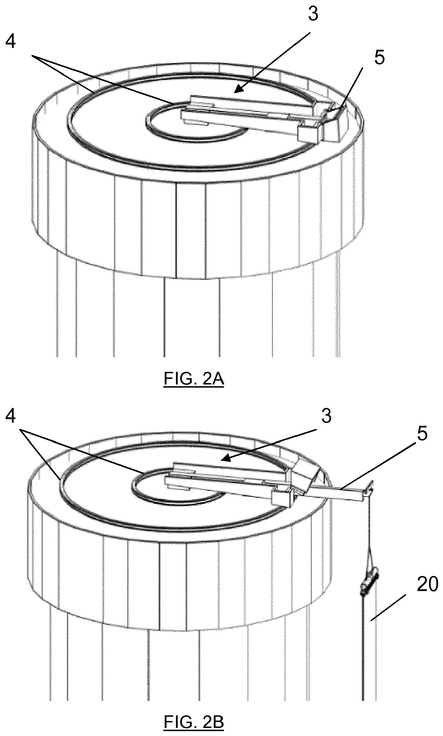

Selon une première forme d'exécution préférée de l'invention, la grue 3, par exemple du type à bras 5 horizontal télescopique, est installée au-dessus d'un récepteur solaire 2 et guidée en rotation à 360° par des rails concentriques 4, au moins au nombre de deux. Cette grue a deux positions: une position d'attente ou « standby » et une position de déploiement opérationnelle. Ces différentes positions sont présentées respectivement dans les figures 1, 2A et 2B.

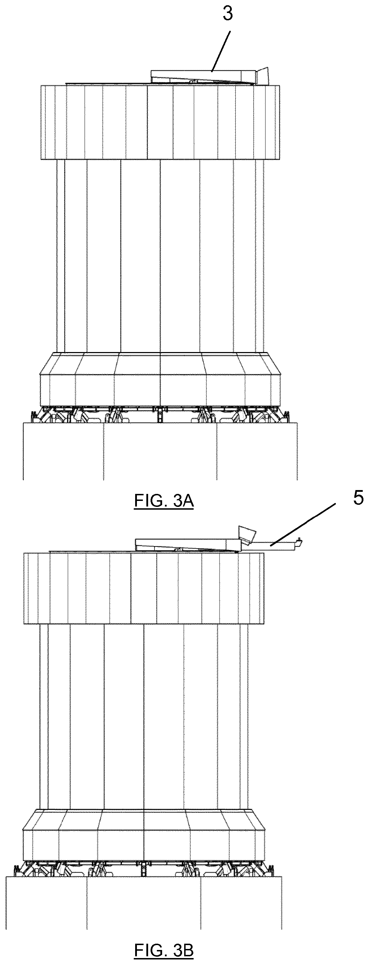

Les figures 3A à 3D présentent les différentes étapes nécessaires à l'installation ou à l'échange des panneaux solaires 20 lors d'une opération de maintenance. Ces figures montrent ici la pose d'un nouveau panneau. Les opérations inverses sont bien sûr réalisées lors de la dépose d'un panneau (non représenté).

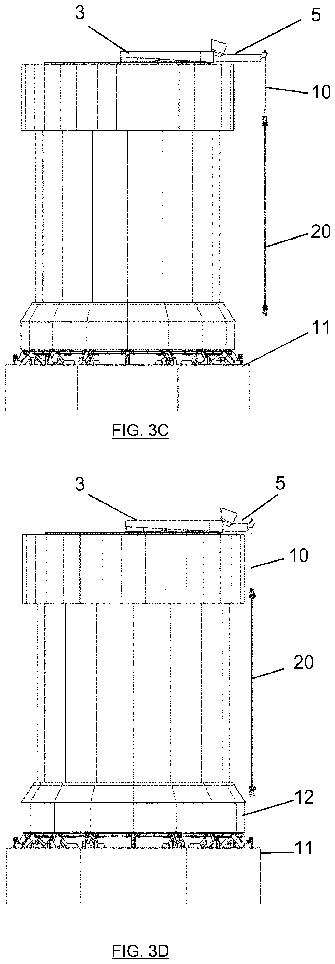

Le bras de la grue 5 est d'abord déployé (Figures 3A et 3B). Grâce à un câble 10 attaché à l'extrémité du bras déployé 5 de la grue, le panneau 20 à poser est acheminé depuis le sol ou la plateforme 11 de la tour sur laquelle le récepteur 2 est installé, à hauteur de l'emplacement où il va être posé, avec éventuellement une rotation de la grue non représentée (Figures 3C et 3D).

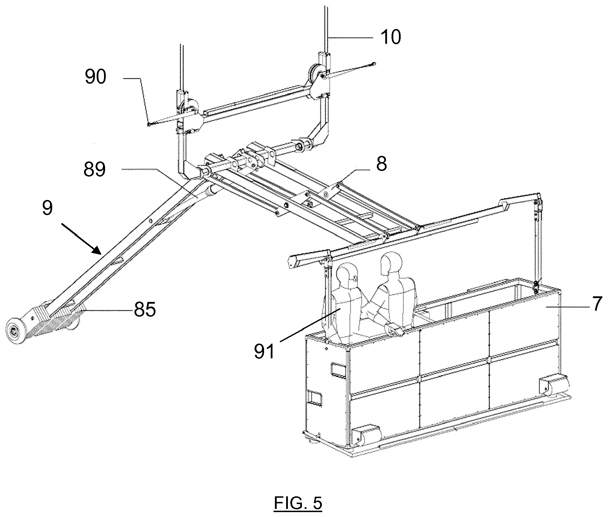

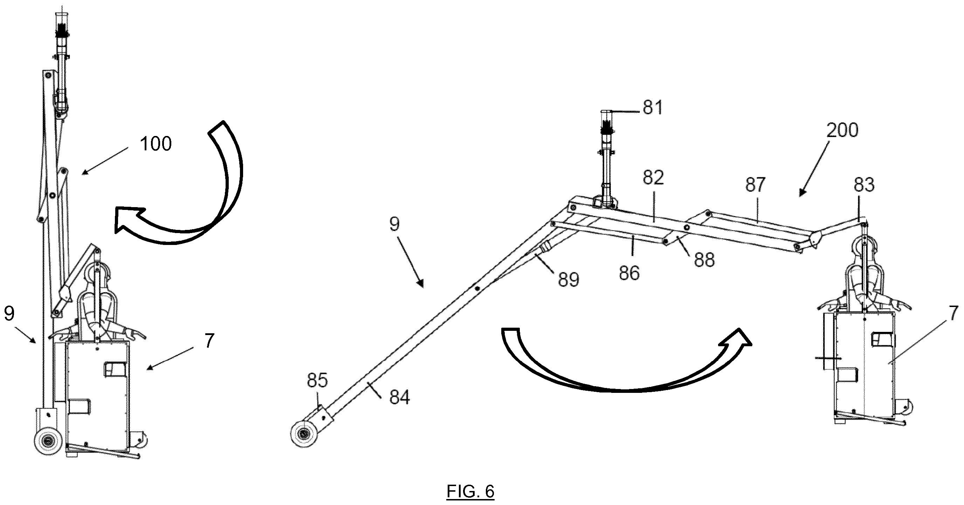

Selon une deuxième forme d'exécution préférée de l'invention, lors des opérations de maintenance requérant l'intervention d'opérateurs, on utilise, comme représenté sur la figure 5, une nacelle 7 solidaire d'un pantographe 8, permettant le déplacement horizontal et déporté de la nacelle, équilibré par un système de balance 9. La figure 6 montre le positionnement de la nacelle 7 d'une part lorsque le pantographe 8 est en configuration repliée 100 et d'autre part lorsque le pantographe est en configuration déployée 200.

Le pantographe est un dispositif mécanique bien connu de l'homme de métier, basé sur un parallélogramme articulé ou sur des variantes plus complexes, qui sera utilisé ici pour sa capacité de positionnement très précis et sa capacité de repliement du dispositif de nacelle dans un volume compact.

Selon l'exemple de forme d'exécution non limitatif de l'objet couvert par la présente invention, représenté sur les figures 5 et 6, la nacelle 7 pouvant accueillir au moins un opérateur de maintenance 91 est solidaire du dispositif mécanique de balance 9 à pantographe 8 comportant un contrepoids 85, ainsi qu'un bras de connexion 81 pour suspendre l'ensemble nacelle-dispositif de balance à pantographe 7, 8, 9 au câble 10 du bras télescopique 5 de la grue 3, le dispositif de balance à pantographe 8, 9 permettant à la nacelle 7 de se déplacer horizontalement par déploiement, respectivement repliement, du pantographe 8, grâce à un actionneur 89 permettant ainsi d'écarter, respectivement de rapprocher, le contrepoids 85 de la nacelle 7. Le contrepoids 85 est fixé à une première extrémité d'une poutre 84 dont l'autre extrémité est montée pivotante sur une première extrémité du pantographe 8, la seconde extrémité du pantographe 8 étant accrochée à la nacelle 7. L'actionneur 89 comprend un vérin hydraulique connecté entre un point fixe de la poutre 84 et une extrémité du bras de connexion 81 permettant d'attacher l'ensemble nacelle-dispositif de balance à pantographe 7, 8, 9 au câble 10 de la grue 3.

Dans une forme d'exécution particulière, le contrepoids 85 peut être fixé, de manière réglable, à différents endroits de la poutre 84. Dans ce cas, le dispositif de balance 9 obéit au principe connu de la balance romaine.

Toujours à titre d'exemple non limitatif, le pantographe 8 est composé d'un premier étrier 82 monté pivotant sur la poutre 84 et sur un second étrier 83, attaché à la nacelle 7, d'une plaque pivot 88 montée pivotante sur un point central du premier étrier 82 et montée pivotante à ses deux extrémités sur une première extrémité de deux barres 86, 87 articuées respectivement à leur autre extrémité sur la poutre 84 et sur le second étrier 83.

Néanmoins, l'invention, non limitée au dispositif décrit ci-dessus, couvre tous les dispositifs mécaniques permettant d'obtenir les différentes positions suivantes possibles de la nacelle 7 (voir figures 4, 5) :
- position « standby » : position en attente sur la plateforme externe 11 de la tour 1 (figures 4 et 6, gauche) ;
- position avec pantographe 8 non déployé: pour des interventions au niveau du bouclier thermique 12 (figure 4 et 6, gauche) ;
- position avec pantographe 8 déployé: pour des interventions sur le panneau récepteur 20 (figures 4, 5 et 6, droite).

L'invention concerne également toutes les formes d'exécution pouvant relever d'optimisations au niveau du dimensionnement de la grue et/ou de la nacelle, en particulier relatives au fait :
- d'augmenter la longueur et/ou la hauteur de la nacelle,
- d'augmenter la distance d'actionnement du pantographe,
- d'augmenter la longueur du bras du pantographe.

L'impact environnemental de cette invention peut également être pris en compte :
- en optimisant le design de la grue et de la nacelle afin d'alléger leur poids (moins de matière) et par conséquence réduire leur impact environnemental,
- en utilisant comme élément majeur l'acier qui est un matériau recyclable,
- en adoptant un procédé de fabrication du système réduisant l'impact environnemental,
- en choisissant pour les moteurs qui actionnent la grue des moteurs électriques à faible consommation, donc sans émission de C02.

L'équipement selon la présente invention appartient au domaine des grues rotatives équipées d'un berceau pliable à effet de balance (romaine) et en possède les effets avantageux :
- un positionnement précis ;
- le rangement possible de la structure de berceau ;
- le renvoi des charges sur le chemin de roulement de la grue.

### Liste des symboles de référence

- 1: Tour solaire
- 2: Récepteur solaire
- 3: Grue
- 4: Rails de guidage
- 5: Bras télescopique de grue
- 6: Ensemble nacelle et pantographe
- 7: Nacelle
- 8: Pantographe
- 9: Dispositif de balance
- 10: Câble de grue
- 11: Plateforme
- 12: Bouclier thermique
- 20: Panneau récepteur
- 81: Bras de connexion
- 82: Étrier principal
- 83: Étrier secondaire
- 84: Poutre
- 85: Contrepoids
- 86: Barre
- 87: Barre
- 88: Plaque pivot
- 89: Vérin hydraulique
- 90: Poulie
- 91: Opérateur de maintenance
- 100: Position repliée du pantographe

## Revendications

1. Tour (1) pour centrale solaire à concentration comprenant une plateforme externe supérieure (11) sur laquelle est disposé un récepteur solaire (2) essentiellement cylindrique avec une surface externe latérale et une base supérieure, la surface latérale du récepteur (2) comportant une pluralité de panneaux récepteurs (20) montés de manière amovible et un système de pose et de maintenance des panneaux récepteurs (20), **caractérisé en ce que** le système de pose et de maintenance des panneaux récepteurs (20) comprend une grue (3) montée rotative à 360° et guidée au moyen d'au moins deux rails concentriques (4), sur la base supérieure du récepteur (2).

2. Tour (1) pour centrale solaire à concentration selon la revendication 1, **caractérisée en ce que** la grue (3) est disposée essentiellement horizontalement et est muni d'un bras télescopique (5) avec un treuil permettant de dérouler un câble (10).

3. Tour (1) pour centrale solaire à concentration selon la revendication 1, **caractérisée en ce que** la grue (3) est installée de façon permanente sur la tour (1).

4. Tour (1) pour centrale solaire à concentration selon la revendication 1, **caractérisée en ce que** le système de pose et de maintenance des panneaux récepteurs (20) comprend également une nacelle (7) pouvant accueillir au moins un opérateur de maintenance, solidaire d'un dispositif mécanique de balance (9) à pantographe (8) apte à conférer à la nacelle (7) :
- soit une position attente sur la plateforme externe (11) de la tour (1) ;
- soit une position dans laquelle le pantographe (8) est non déployé entièrement pour des interventions au niveau d'un bouclier thermique (12) du récepteur (2) ;
- soit une position dans laquelle le pantographe (8) est déployé pour des interventions sur un panneau récepteur (20).

5. Tour (1) pour centrale solaire à concentration selon la revendication 4, **caractérisée en ce que** dispositif mécanique de balance (9) à pantographe (8) comporte un contrepoids (85), ainsi qu'un bras de connexion (81) pour suspendre l'ensemble nacelle-dispositif de balance à pantographe (7, 8, 9) au câble (10) du bras télescopique (5) de la grue (3), le dispositif de balance à pantographe (8, 9) permettant à la nacelle (7) de se déplacer horizontalement par déploiement, respectivement repliement, du pantographe (8), grâce à un actionneur (89) permettant ainsi d'écarter, respectivement de rapprocher, le contrepoids (85) de la nacelle (7).

6. Tour (1) pour centrale solaire à concentration selon la revendication 5, **caractérisée en ce que** le contrepoids (85) est fixé soit à une première extrémité d'une poutre (84), soit de manière réglable en un autre point de la poutre (84), dont l'autre extrémité est montée pivotante sur une première extrémité du pantographe (8), la seconde extrémité du pantographe (8) étant accrochée à la nacelle (7).

7. Tour (1) pour centrale solaire à concentration selon la revendication 5, **caractérisée en ce que** l'actionneur (89) comprend un vérin hydraulique connecté entre un point fixe de la poutre (84) et une extrémité du bras de connexion (81) permettant d'attacher l'ensemble nacelle-dispositif de balance à pantographe (7, 8, 9) au câble (10) de la grue (3).

8. Tour (1) pour centrale solaire à concentration selon la revendication 5, **caractérisée en ce que** le pantographe (8) est composé d'un premier étrier (82) monté pivotant sur la poutre (84) et sur un second étrier (83), attaché à la nacelle (7), d'une plaque pivot (88) montée pivotante sur un point central du premier étrier (82) et montée pivotante à ses deux extrémités sur une première extrémité de deux barres (86, 87) articulées respectivement à leur autre extrémité sur la poutre (84) et sur le second étrier (83).

9. Procédé de pose/dépose d'un panneau récepteur (20) dans une tour (1) pour centrale solaire à concentration, selon l'une quelconque des revendications 1 à 3, au niveau d'un emplacement prévu à cet effet sur la surface externe latérale du récepteur (2), caractérisé au moins par les étapes successives suivantes :
- pour la pose, on oriente la grue (3) selon l'azimut où se trouve la position du panneau (20) à (rem)placer,
- on déploie le bras télescopique (5) de la grue (3),
- on déroule le câble (10) et on accroche le panneau récepteur (20) à celui-ci soit au niveau du pied de la tour (1), soit au niveau de la plateforme (11) au pied du récepteur (2),
- on remonte le panneau (20) en enroulant le câble (10) jusqu'à hauteur de l'emplacement prévu pour la pose,
- on rentre partiellement le bras télescopique (5) de la grue (3) pour rapprocher le panneau (20) de l'emplacement,
- on solidarise le panneau (20) au récepteur (2) dans cet emplacement,
- les opérations de dépose étant pratiquées en sens inverse par rapport à la séquence ci-dessus.

10. Procédé de maintenance d'un panneau récepteur (20) en place dans une tour (1) pour centrale solaire à concentration, selon l'une quelconque des revendications 4 à 8, caractérisé au moins par les étapes successives suivantes :
- on déploie le bras télescopique (5) de la grue (3), on déroule le câble (10) et on l'accroche à l'ensemble nacelle-dispositif de balance à pantographe (7, 8, 9) se trouvant en standby sur la plateforme (11) de la tour (1), au pied du récepteur (2), le pantographe (8) étant en position non déployée,
- on remonte l'ensemble nacelle-dispositif de balance à pantographe (7, 8, 9)
- on oriente la grue (3) selon l'azimut où se trouve la position du panneau (20) dont la maintenance doit être effectuée,
- on rapproche l'ensemble nacelle-dispositif de balance à pantographe (7, 8, 9) du récepteur (2) en utilisant la grue (3),
- on approche la nacelle (7) à proximité du panneau (20) dont la maintenance est à effectuer en déployant le pantographe (8).

11. Procédé de maintenance sur un bouclier thermique (12) se trouvant en avant d'un récepteur (2) sur une tour (1) pour centrale solaire à concentration, selon l'une quelconque des revendications 4 à 8, caractérisé au moins par les étapes successives suivantes :
- on déploie le bras télescopique (5) de la grue (3), on déroule le câble (10) et on l'accroche à l'ensemble nacelle-dispositif de balance à pantographe (7, 8, 9) se trouvant en standby sur la plateforme (11) de la tour, au pied du récepteur (2), le pantographe (8) étant en position non déployée,
- on remonte l'ensemble nacelle-dispositif de balance à pantographe (7, 8, 9),
- on oriente la grue (3) selon l'azimut où se trouve l'endroit du bouclier thermique (12) où la maintenance doit être effectuée,
- on rapproche l'ensemble nacelle-dispositif de balance à pantographe (7, 8, 9) du bouclier thermique (12) en utilisant la grue (3), le pantographe (8) étant toujours non déployé,
si nécessaire, on approche la nacelle (7) à proximité du bouclier thermique en déployant au moins partiellement le pantographe (8).

## Patentansprüche

1. Turm (1) für konzentrierendes Solarkraftwerk, umfassend eine obere externe Plattform (11), auf der ein im Wesentlichen zylindrischer Solarempfänger (2) mit einer seitlichen äußeren Fläche und einer oberen Basis angeordnet ist, wobei die seitliche Fläche des Empfängers (2) eine Vielzahl von Empfängerplatten (20) umfasst, die auf abnehmbare Weise montiert sind, und ein System zur Anbringung und Wartung der Empfängerplatten (20), **dadurch gekennzeichnet, dass** das System zur Anbringung und Wartung der Empfängerplatten (20) einen Kran (3) umfasst, der drehend um 360° montiert und mit Hilfe von mindestens zwei konzentrischen Schienen (4) auf der oberen Basis des Empfängers (2) geführt ist.

2. Turm (1) für konzentrierendes Solarkraftwerk nach Anspruch 1, **dadurch gekennzeichnet, dass** der Kran (3) im Wesentlichen horizontal angeordnet ist und mit einem teleskopischen Arm (5) mit einer Winde ausgestattet ist, die ermöglicht, ein Kabel (10) abzurollen.

3. Turm (1) für konzentrierendes Solarkraftwerk nach Anspruch 1, **dadurch gekennzeichnet, dass** der Kran (3) auf permanente Weise auf dem Turm (1) installiert ist.

4. Turm (1) für konzentrierendes Solarkraftwerk nach Anspruch 1, **dadurch gekennzeichnet, dass** das System zur Anbringung und Wartung der Empfängerplatten (20) auch eine Gondel (7) umfasst, die mindestens einen Wartungsbediener aufnehmen kann, die fest mit einer mechanischen Balancevorrichtung (9) mit Pantograph (8) verbunden ist, die ausgelegt ist, um der Gondel (7) Folgendes zu verleihen:
- entweder eine Warteposition auf der äußeren Plattform (11) des Turms (1);
- oder eine Position, in der der Pantograph (8) für Interventionen auf dem Niveau eines Wärmeschilds (12) des Empfängers (2) nicht vollständig ausgezogen ist;
- oder eine Position, in der der Pantograph (8) für Interventionen auf einer Empfängerplatte (20) ausgezogen ist.

5. Turm (1) für konzentrierendes Solarkraftwerk nach Anspruch 4, **dadurch gekennzeichnet, dass** die mechanische Balancevorrichtung (9) mit Pantograph (8) ein Gegengewicht (85) umfasst, ebenso wie einen Verbindungsarm (81), um die Einheit Gondel-Balancevorrichtung mit Pantograph (7, 8, 9) am Kabel (10) des teleskopischen Arms (5) des Krans (3) aufzuhängen, wobei die Balancevorrichtung mit Pantograph (8, 9) der Gondel (7) ermöglicht, sich horizontal durch Ausziehen bzw. Einziehen des Pantographen (8) dank einer Betätigungsvorrichtung (89) zu verschieben, wobei somit ermöglicht wird, die Gegengewichte (85) von der Gondel (7) zu entfernen bzw. an diese anzunähern.

6. Turm (1) für konzentrierendes Solarkraftwerk nach Anspruch 5, **dadurch gekennzeichnet, dass** das Gegengewicht (85) entweder an ein erstes Ende eines Trägers (84) oder auf einstellbare Weise an einen anderen Punkt des Trägers (84) fixiert ist, dessen anderes Ende schwenkend auf ein erstes Ende des Pantographen (8) montiert ist, wobei das zweite Ende des Pantographen (8) an die Gondel (7) befestigt ist.

7. Turm (1) für konzentrierendes Solarkraftwerk nach Anspruch 5, **dadurch gekennzeichnet, dass** die Betätigungsvorrichtung (89) eine hydraulische Winde umfasst, die zwischen einem fixen Punkt des Trägers (84) und einem Ende des Verbindungsarms (81) verbunden ist, wodurch ermöglicht wird, die Einheit Gondel-Balancevorrichtung mit Pantograph (7, 8, 9) am Kabel (10) des Krans (3) zu befestigen.

8. Turm (1) für konzentrierendes Solarkraftwerk nach Anspruch 5, **dadurch gekennzeichnet, dass** der Pantograph (8) aus einem ersten Bügel (82) zusammengesetzt ist, der schwenkend auf dem Träger (84) und auf einem zweiten Bügel (83) montiert ist, der an die Gondel (7) befestigt ist, einer Schwenkplatte (88), die schwenkend auf einem zentralen Punkt des ersten Bügels (82) montiert ist und schwenkend an seinen zwei Enden auf einem ersten Ende von zwei Stangen (86, 87) montiert ist, die jeweils an ihrem anderen Ende auf dem Träger (84) und auf dem Bügel (83) gelenkig verbunden sind.

9. Verfahren zur Anbringung/Entfernung einer Aufnahmeplatte (20) in einem Turm (1) für ein konzentrierendes Solarkraftwerk nach einem der Ansprüche 1 bis 3 auf der Ebene einer Stelle, die zu diesem Zweck vorgesehen ist, auf der seitlichen äußeren Fläche (2), gekennzeichnet mindestens durch die folgenden sukzessiven Schritte:
- für die Anbringung wird der Kran (3) gemäß dem Azimut ausgerichtet, in dem sich die Position der Platte (20), die ersetzt (angebracht) werden soll, befindet,
- der teleskopische Arm (5) des Krans (3) wird ausgezogen,
- das Kabel (10) wird abgerollt, und die Aufnahmeplatte (20) wird auf dasselbe entweder auf dem Niveau des Fußes des Turms (1) oder auf dem Niveau der Plattform (11) am Fuß des Empfängers (2) befestigt,
- die Platte (20) wird erneut montiert, wobei das Kabel (10) bis zur Höhe der Stelle, die für die Anbringung vorgesehen ist, aufgerollt wird,
- der teleskopische Arm (5) des Krans (3) wird teilweise zurückgezogen, um die Platte (20) an die Stelle anzunähern,
- die Platte (20) wird fest mit dem Empfänger (2) an dieser Stelle befestigt,
- wobei die Vorgänge des Entfernens in umgekehrter Richtung mit Bezug auf die oben angegebene Sequenz durchgeführt werden.

10. Verfahren zum Warten einer Aufnahmeplatte (20), das in einem Turm (1) für konzentrierendes Solarkraftwerk durchgeführt ist, nach einem der Ansprüche 4 bis 8, gekennzeichnet mindestens durch die folgenden sukzessiven Schritte:
- der teleskopische Arm (5) des Krans (3) wird ausgezogen, das Kabel (10) wird abgerollt und an die Einheit Gondel-Balancevorrichtung mit Pantograph (7, 8, 9), die sich in Standby auf der Plattform (11) des Turms (1) befindet, am Fuß des Empfängers (2) befestigt, wobei sich der Pantograph (8) in der nicht ausgezogenen Position befindet,
- die Einheit Gondel-Balancevorrichtung mit Pantograph (7, 8, 9) wird erneut montiert,
- der Kran (3) wird gemäß dem Azimut ausgerichtet, in dem sich die Position der Platte (20) befindet, deren Wartung durchgeführt werden muss,
- die Einheit Gondel-Balancevorrichtung mit Pantograph (7, 8, 9) wird an den Empfänger (2) unter Verwendung des Krans (3) angenähert,
- die Gondel (7) wird in die Nähe der Platte (20), deren Wartung durchgeführt werden soll, unter Ausziehen des Pantographen (8) angenähert.

11. Verfahren zur Wartung auf einem Wärmeschild (12), das sich vor einem Empfänger (2) auf einem Turm (1) für konzentrierendes Solarkraftwerk befindet, nach einem der Ansprüche 4 bis 8 befindet, wobei das Verfahren mindestens durch die folgenden Schritte gekennzeichnet ist:
- der teleskopische Arm (5) des Krans (3) wird ausgezogen, das Kabel (10) wird abgerollt und an die Einheit Gondel-Balancevorrichtung mit Pantograph (7, 8, 9), die sich in Standby auf der Plattform (11) des Turms (1) befindet, am Fuß des Empfängers (2) befestigt, wobei sich der Pantograph (8) in der nicht ausgezogenen Position befindet,
- die Einheit Gondel-Balancevorrichtung mit Pantograph (7, 8, 9) wird erneut montiert,
- der Kran (3) wird gemäß dem Azimut ausgerichtet, in dem sich die Stelle des Wärmeschilds (12) befindet, an der die Wartung durchgeführt werden muss,
- die Einheit Gondel-Balancevorrichtung mit Pantograph (7, 8, 9) wird an das Wärmeschild (12) unter Verwendung des Krans (3) angenähert, wobei der Pantograph (8) immer nicht ausgezogen ist,
falls erforderlich wird die Gondel (7) in die Nähe des Wärmeschilds angenähert, indem der Pantograph (8) mindestens teilweise ausgezogen wird.

## Claims

1. A tower (1) for a concentrated solar power plant comprising an upper external platform (11) on which is arranged an essentially cylindrical solar receiver (2) with an external side surface and an upper base, the side surface of the receiver (2) comprising a plurality of removably mounted receiving panels (20) and a placement and maintenance system for the receiving panels (20), **characterized in that** the placement and maintenance system for the receiving panels (20) comprises a crane (3) mounted rotating 360° and guided using at least two concentric rails (4), on the upper base of the receiver (2).

2. The tower (1) for a concentrated solar power plant according to claim 1, **characterized in that** the crane (3) is arranged essentially horizontally and is provided with a telescoping arm (5) with a winch making it possible to unwind a cable (10).

3. The tower (1) for a concentrated solar power plant according to claim 1, **characterized in that** the crane (3) is installed permanently on the tower (1).

4. The tower (1) for a concentrated solar power plant according to claim 1, **characterized in that** the placement and maintenance system (20) for the receiving panels also comprises a cradle (7) able to accommodate at least one maintenance operator, secured to a mechanical pantograph (8) scale device (9) suitable for giving the cradle (7):
- either a standby position on the external platform (11) of the tower (1);
- or a position in which the pantograph (8) is not fully deployed for interventions at a heat shield (12) of the receiver (2);
- or a position in which the pantograph (8) is deployed for interventions on a receiving panel (20).

5. The tower (1) for a concentrated solar power plant according to claim 4, **characterized in that** the mechanical pantograph (8) scale device (9) comprises a counterweight (85), as well as a connecting arm (81) to suspend the cradle-pantograph scale device assembly (7, 8, 9) to the cable (10) of the telescoping arm (5) of the crane (3), the pantograph scale device (8, 9) allowing the cradle (7) to move horizontally by deploying, folding, respectively, the pantograph (8), owing to an actuator (89) thus making it possible to move the counterweight (85) away from the cradle (7), bring the counterweight (85) closer to the cradle (7), respectively.

6. The tower (1) for a concentrated solar power plant according to claim 5, **characterized in that** the counterweight (85) is fastened either to a first end of a beam (84), or adjustably at another point of the beam (84), the other end of which is pivotally mounted on a first end of the pantograph (8), the second end of the pantograph (8) being attached to the cradle (7).

7. The tower (1) for a concentrated solar power plant according to claim 5, **characterized in that** the actuator (89) comprises a hydraulic jack connected between a fixed point of the beam (84) and an end of the connecting arm (81) making it possible to attach the cradle-pantograph scale device assembly (7, 8, 9) to the cable (10) of the crane (3).

8. The tower (1) for a concentrated solar power plant according to claim 5, **characterized in that** the pantograph (8) is made up of a first stirrup (82) pivotally mounted on the beam (84) and on a second stirrup (83), attached to the cradle (7), of a pivot plate (88) pivotally mounted on a central point of the first stirrup (82) and pivotally mounted at both of its ends on a first end of two bars (86, 87) respectively articulated at their other end on the beam (84) and on the second stirrup (83).

9. A method for placing/removing a receiving panel (20) in a tower (1) for a concentrated solar power plant, according to any one of claims 1 to 3, at a location provided to that end on the external side surface of the receiver (2), **characterized by** at least the following successive steps:
- for placement, the crane (3) is oriented along the azimuth where the position of the panel (20) to be (re)placed is located,
- the telescoping arm (5) of the crane (3) is deployed,
- the cable (10) is unwound and the receiving panel (20) is attached thereto either at the base of the tower (1) or at the platform (11) at the base of the receiver (2),
- the panel (20) is raised by winding the cable (10) up to the height of the location provided for placement,
- the telescoping arm (5) of the crane (3) is partially retracted to bring the panel (20) closer to the location,
- the panel (20) is secured to the receiver (2) in this location,
- the removal operations being performed in reverse relative to the above sequence.

10. A maintenance method for a receiving panel (20) in position in a tower (1) for a concentrated solar power plant, according to any one of claims 4 to 8, **characterized by** at least the following successive steps:
- the telescoping arm (5) of the crane (3) is deployed, the cable (10) is unwound and it is attached to the cradle-pantograph scale device assembly (7, 8, 9), which is in standby on the platform (11) of the tower (1), at the base of the receiver (2), the pantograph (8) being in the non-deployed position,
- the cradle-pantograph scale device assembly (7, 8, 9) is raised,
- the crane (3) is oriented along the azimuth where the position of the panel (20) to be maintained is located,
- the cradle-pantograph scale device assembly (7, 8, 9) is brought closer to the receiver (2) using the crane (3),
- the cradle (7) is brought into the vicinity of the panel (20) to be maintained by deploying the pantograph (8).

11. A maintenance method on a heat shield (12) located in front of a receiver (2) on a tower (1) for a concentrated solar power plant, according to any one of claims 4 to 8, **characterized by** at least the following successive steps:
- the telescoping arm (5) of the crane (3) is deployed, the cable (10) is unwound and it is attached to the cradle-pantograph scale device assembly (7, 8, 9), which is in standby on the platform (11) of the tower, at the base of the receiver (2), the pantograph (8) being in the non-deployed position,
- the cradle-pantograph scale device assembly (7, 8, 9) is raised,
- the crane (3) is oriented along the azimuth where the location of the heat shield (12) where the maintenance has to be performed is located,
- the cradle-pantograph scale device assembly (7, 8, 9) is brought closer to the heat shield (12) using the crane (3), the pantograph (8) still not being deployed,
- if necessary, the cradle (7) is brought into the vicinity of the heat shield by deploying the pantograph (8) at least partially.
